# DEMANDE DE BREVET EUROPEEN

(11) **EP 1 542 472 A1**
(43) Date de publication de la demande: **15.06.2005**
(21) Numéro de dépôt: 03293103.2
(22) Date de dépôt: 10.12.2003
(51) Int. Cl.: H04N 7/24, G06F 9/445

(54) **Procédé et dispositif de récupération d'information dans des systèmes de TV numérique interactive**

(71) Demandeur: Canal + Technologies, 75906 Paris (FR)
(72) Inventeur: Arques, Xavier, 75906 Paris Cedex 15 (FR)
(74) Mandataire: Nicolle, Olivier

(57) **Abrégé**

Le procédé selon l'invention est mis en oeuvre essentiellement dans des dispositifs terminaux d'un système de TV numérique interactive. Le procédé comporte une étape pour stocker dans une mémoire-cache du dispositif terminal des informations transportées dans un flux de données du système. Le procédé comporte aussi une étape caractéristique consistant à rechercher (E41), en fonction d'au moins un critère de sélection prédéterminé, une information demandée dans au moins un des supports d'information formés par le flux de données et la mémoire-cache. Le procédé trouve une application privilégiée dans les systèmes de TV numérique interactive répondant aux normes MPEG-DVB. De préférence, le stockage des informations et/ou tables MPEG dans la mémoire-cache est effectué selon une organisation structurelle similaire à celle des informations et/ou tables MPEG dans le flux de données. L'invention permet aux programmes applicatifs d'accéder de manière optimale aux tables MPEG et informations de service.

## Description

La présente invention concerne de manière générale la récupération d'une information diffusée dans un système de télévision numérique interactive. Plus particulièrement, l'invention concerne la récupération d'une information diffusée à l'intention d'un programme applicatif s'exécutant dans un dispositif terminal d'un système de télévision numérique interactive.

La présente invention trouve une application privilégiée, mais non exclusive, dans la récupération d'informations de service liées à des chaînes de télévision et des services interactifs intégrés dans des bouquets de programmes diffusés par des systèmes de télévision numérique.

Dans la suite de la description, le terme «service», dans le contexte d'un service diffusé vers des utilisateurs ou abonnés par un système de télévision numérique interactive, est utilisé aussi bien pour une chaîne de télévision que pour un service interactif ou pas.

Dans l'état de la technique, il est connu des systèmes de télévision numérique tels que ceux définis par les différentes normes DVB (Digital Video Broadcast) et MPEG (Motion Picture Expert Group) développées respectivement par l'ETSI (European Telecommunications Standards Institute) et l'ISO (International Standard Organisation).

On notera que le terme « DVB » se réfère ici aussi bien aux normes DVB, telles que DVB-S, DVB-C, DVB-T, etc., qu'à leur extension à travers la norme DVB-MHP (Multimedia Home Platform). Le terme «MPEG» quant à lui se réfère ici non seulement aux normes MPEG-2 et MPEG-4 mais aussi aux variantes, modifications, et développements de celles-ci applicables à la transmission de données numériques incluant une norme DVB.

Les systèmes de télévision numérique de l'état de la technique transmettent, via des centres de diffusion, des informations numériques supportant différents services, dont certains interactifs, à destination de dispositifs terminaux. Des techniques de compression, codage et multiplexage sont employées en association avec d'autres techniques connues pour former des flux de données, également appelés flux de transport («transport stream» en anglais). Les flux de données transportent les services diffusés vers les dispositifs terminaux ainsi que les informations de service liées à ces services diffusés.

La transmission des flux de données jusqu'aux dispositifs terminaux est classiquement effectuée à travers des canaux de fréquence respectifs auxquels correspondent des transpondeurs situés dans une ou plusieurs bornes relais. Une borne relais est par exemple constituée d'un satellite géostationnaire équipé d'autant de transpondeurs que de canaux de fréquence à transmettre. Les transpondeurs assurent les fonctions de réception, de régénération/amplification et de réémission des canaux de fréquence vers les dispositifs terminaux.

Pour permettre l'interactivité entre un dispositif terminal et le centre de diffusion, une liaison de retour vers le centre de diffusion est fournie soit via le même support de transmission que celui à travers lequel sont diffusés les services, soit via un support différent tel qu'une liaison téléphonique.

Les flux de données comprennent chacun une pluralité de paquets dans lesquels sont intégrées des données numériques vidéo, audio et de texte, ainsi que les informations de service.

Les informations de service sont transportées sous la forme de tables. Les tables sont transmises régulièrement de manière cyclique.

Suivant leur nature, les tables sont par exemple diffusées sur l'ensemble des flux de données du bouquet ou spécifiquement sur les flux de données convoyant des services auxquels elles sont associées.

Chaque table est diffusée avec une certaine récurrence, dépendante de sa nature, qui doit être suffisante pour rafraîchir les informations de service au niveau des dispositifs terminaux.

Des tables de signalisation, désignées de manière générique PSI/SI, et des tables privées dont les contenus sont définis par l'opérateur du système de télévision numérique sont prévues par les normes MPEG - DVB.

Les tables de signalisation PSI/SI comprennent par exemple :
- la table CAT incluant des messages ECM pour le contrôle d'accès des abonnés au système de télévision numérique et le décryptage des services,
- la table SDT relative aux services présents sur un flux de données,
- la table BAT relative à l'association des services en bouquets,
- la table NIT regroupant l'ensemble des services de l'opérateur qui sont accessibles aux utilisateurs et fournissant les diverses informations de calage (fréquence, polarisation, FEC, etc.) qui sont nécessaires au dispositif terminal pour chacun des services diffusés,
- la table EIT fournissant des informations sur des événements en cours ou à venir, informations qui sont exploitées par le guide électronique des programmes EPG,
- etc.

Les tables privées peuvent être utilisées pour transporter des informations de service relatives aux services interactifs et comprennent par exemple des tables liées au téléachat ou à la diffusion payante à la carte PPV («Pay-Per-View» en anglais).

Un dispositif terminal est constitué généralement soit par une combinaison d'un dispositif récepteur/décodeur («Set-Top-Box» en anglais) et d'un récepteur de télévision classique, soit par un ensemble intégré IRD («Integrated Receiver Decoder» en anglais) assurant les fonctions de réception, décodage et visualisation.

Le dispositif récepteur/décodeur comprend classiquement une mémoire-tampon dans laquelle sont enregistrées les données numériques extraites du flux de données.

Les systèmes de télévision numérique interactive de la technique antérieure décrits ci-dessus présentent notamment les inconvénients suivants :
- Les tables diffusées de manière cyclique représente un débit binaire important et occupent une part non négligeable de la bande des fréquences d'émission du système, au détriment par exemple du nombre des services offerts aux utilisateurs.
- Dans un dispositif récepteur/décodeur, le temps d'accès moyen d'un programme applicatif à une information de service est lié à la période du cycle de diffusion de la table correspondante. Pour une information de service contenue dans une table à faible récurrence, le temps d'accès peut donc être relativement long.
- Lorsqu'un dispositif récepteur/décodeur est calé sur un transpondeur du système, afin de recevoir un service diffusé à travers un flux de données associé à ce transpondeur, le dispositif récepteur/décodeur n'a accès qu'aux tables présentes dans ce flux de données. Dans un dispositif récepteur/décodeur équipé de 2 tuners, le dispositif peut avoir accès à davantage de tables, mais il reste néanmoins limité dans son accessibilité aux informations de service. Une accessibilité élargie aux informations de service est intéressante par exemple pour afficher sur l'écran de visualisation du dispositif terminal des informations relatives à des services autres que le service en cours.

En tant qu'autre technique antérieure, il est connu du demandeur un dispositif de diffusion et chargement d'information conçu de manière à stocker dans une mémoire non volatile d'un récepteur/décodeur des informations de service en provenance d'un centre de diffusion d'un système de communication du type télévision numérique.

Dans ce dispositif de diffusion et chargement d'information, il est prévu un dispositif de chargement pour charger de manière automatique les informations de service dans la mémoire non volatile, appelée mémoire-cache. De plus, un transpondeur dédié peut également être prévu pour transporter de manière groupée l'ensemble des informations de service du système. Dans le récepteur / décodeur, une accessibilité à toutes les informations de service est ainsi possible à travers un seul tuner calé sur le transpondeur de service.

Le chargement automatique des informations de service dans la mémoire-cache est déclenché par une minuterie programmée, par exemple la nuit, ou lors de l'apparition d'un évènement particulier tel que la mise en marche du récepteur/décodeur.

Ce dispositif de diffusion et de chargement d'information représente une avancée significative dans la fourniture d'une solution technique aux inconvénients indiqués ci-dessus de la technique antérieure.

Des améliorations supplémentaires sont toutefois souhaitables afin de progresser, d'une part, dans la réduction de la portion de bande de fréquence occupée par les informations de service et, d'autre part, dans la fourniture d'une accessibilité optimale à ces informations par les programmes applicatifs.

La présente invention a essentiellement pour objet d'apporter à la technique antérieure les améliorations souhaitables indiquées plus haut.

La présente invention vise en premier lieu à fournir un procédé de récupération d'information dans un système de télévision numérique interactive dans lequel une information provenant d'une centre de diffusion est transportée dans un flux de données jusqu'à au moins un dispositif terminal dans lequel s'exécute une ou plusieurs applications, le procédé comportant une étape pour charger et stocker l'information dans des moyens de stockage équipant le dispositif terminal, caractérisé en ce qu'il comporte en outre les étapes suivantes exécutées dans le dispositif terminal :
- a) recevoir une demande émise par au moins une application pour récupérer l'information ;
- b) en fonction d'au moins un critère de sélection prédéterminé, rechercher l'information dans au moins un des supports d'information formés par le flux de données, et les moyens de stockage d'information ; et
- c) dans le cas d'une recherche positive, récupérer l'information dans le support d'information contenant l'information et fournir l'information ainsi récupérée à la au moins une application émettrice de la demande.

Corrélativement, l'invention concerne aussi un dispositif de récupération d'information dans un système de télévision numérique interactive dans lequel une information provenant d'un centre de diffusion est transportée dans un flux de données jusqu'à au moins un dispositif terminal dans lequel s'exécute une ou plusieurs applications, le dispositif terminal étant équipé de moyens de stockage d'information et de moyens pour charger l'information dans les moyens de stockage d'information, caractérisé en ce qu'il comporte en outre:
des moyens pour recevoir une demande émise par au moins une application pour récupérer l'information ;
des moyens pour rechercher, en fonction d'au moins un critère de sélection prédéterminé, l'information dans au moins un des supports d'information formés par le flux de données, et les moyens de stockage d'information ; et
des moyens pour récupérer, dans le cas d'une recherche positive, l'information dans le support d'information contenant l'information et fournir l'information ainsi récupérée à la au moins une application émettrice de la demande.

Selon une caractéristique particulière, la recherche comprend une recherche de l'information dans les moyens de stockage.

Selon une autre caractéristique particulière, la recherche comprend une recherche de l'information dans le flux de données.

Selon encore une autre caractéristique particulière, la recherche comprend une recherche de l'information dans les moyens de stockage après une recherche infructueuse dans le flux de données.

Selon encore une autre caractéristique particulière, la recherche comprend une recherche de l'information dans le flux de données après une recherche infructueuse dans les moyens de stockage.

Selon un mode particulier de réalisation de l'invention, un critère de sélection est défini par l'application.

Selon un autre mode particulier de réalisation de l'invention, un critère de sélection est défini par une couche logicielle intermédiaire et/ou une couche matérielle du dispositif terminal.

Selon encore un autre mode particulier de réalisation de l'invention, un critère de sélection est défini par le système de télévision numérique interactive.

De préférence, une mise en forme de l'information récupérée est effectuée avant la fourniture de celle-ci à l'application émettrice de la demande.

Dans son application privilégiée, mais non exclusive, de l'invention aux systèmes de télévision numérique interactive répondant aux normes MPEG-DVB, l'information est encapsulée dans au moins une table MPEG identifiée par un identifiant de table respectif. De plus, la recherche de l'information comprend une recherche de la table MPEG à partir de son identifiant de table respectif tandis que la récupération comprend une récupération de l'information à partir de la table MPEG ainsi identifiée.

De préférence, le stockage des informations et/ou tables MPEG dans les moyens de stockage est effectué selon une organisation structurelle similaire à celle des informations et/ou tables MPEG dans le flux de données.

Selon d'autres aspects, l'invention concerne aussi un dispositif récepteur/décodeur, un dispositif terminal et un système de télévision numérique interactive pour la mise en oeuvre du procédé de l'invention décrit brièvement ci-dessus.

D'autres aspects et avantages de la présente invention apparaîtront plus clairement à la lecture de la description de modes particuliers de réalisation qui va suivre, cette description étant donnée uniquement à titre d'exemple non limitatif et étant faite en référence aux dessins annexés, dans lesquels :
la Fig.1 montre schématiquement un système de télévision numérique interactive selon l'invention ;
la Fig.2 montre schématiquement la structure d'un dispositif terminal inclus dans le système de la Fig.1 ;
la Fig.3 montre schématiquement l'architecture globale d'un dispositif récepteur/décodeur inclus dans le dispositif terminal de la Fig.2 ;
la Fig.4 montre un algorithme général du procédé de récupération d'information selon l'invention ;
la Fig.5 montre un algorithme détaillé d'une l'étape de recherche du procédé selon l'invention; et
les Figs.6A et 6B montrent de manière simplifiée des grandes étapes fonctionnelles respectivement dans un mode de réalisation du dispositif récepteur/décodeur selon l'invention dans lequel la récupération d'information est gérée au niveau d'une couche applicative et dans un autre mode de réalisation du dispositif récepteur/décodeur selon l'invention dans lequel la récupération d'information est gérée au niveau d'une couche logicielle intermédiaire / couche matérielle.

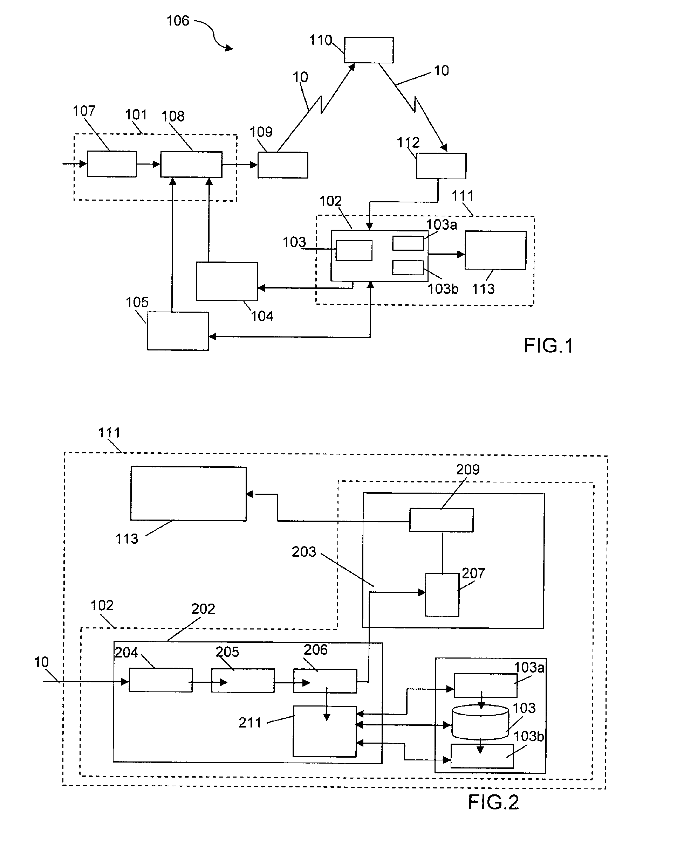

En référence à la Fig.1, un système de télévision numérique interactive 106 comprend un centre de diffusion 101 et au moins un dispositif terminal 111 appartenant à un parc de dispositifs terminaux.

Le dispositif terminal 111 comprend un dispositif récepteur/décodeur 102 et un équipement de visualisation 113.

Le dispositif récepteur/décodeur 102 comprend une architecture matérielle et/ou logicielle incluant notamment un support non volatile 103 appelé mémoire-cache, par exemple sous la forme d'un disque dur, et un dispositif de chargement automatique 103a.

Conformément à l'invention, le dispositif récepteur/décodeur 102 comprend aussi un dispositif de récupération d'information 103b mettant en oeuvre le procédé de l'invention.

Le système de télévision numérique 106 comprend en outre, d'une part un dispositif interactif 104 jouant le rôle de voie de retour, et d'autre part un système d'accès conditionnel 105.

De manière générale, le système de télévision numérique 106 utilise un système de compression de type MPEG pour transmettre des signaux numériques compressés.

Au niveau du centre de diffusion 101, un organe compresseur 107 reçoit un flux numérique, typiquement un flux de signaux audio et/ou vidéo, et transforme ce flux en signaux numériques au format MPEG.

L'organe compresseur 107 est connecté par une liaison à un organe formant multiplexeur et embrouilleur 108 («scrambler» en anglais).

L'organe formant multiplexeur et embrouilleur 108 reçoit une pluralité de sources transformées et/ou des données (application et données d'application), rassemble ces sources et/ou données en un unique canal, et transmet les flux numériques compressés à un émetteur (modulateur/parabole d'émission) 109 du centre de diffusion 101.

L'émetteur 109 transmet les flux de données 10 via une première liaison (satellite, terrestre, câble, combinaison de deux ou plusieurs moyens de transmission) vers une borne relais 110 qui va les retransmettre via une seconde liaison vers des récepteurs 112, par exemple, au travers de paraboles ou antennes. La borne relais 110 est par exemple un satellite équipé d'un certain nombre de transpondeurs qui assurent la réception, la régénération/amplification et la réémission des différents canaux de fréquence supportant les flux de données 10.

Les signaux reçus par les récepteurs (antennes) 112 sont transmis au dispositif récepteur/décodeur 102 du dispositif terminal 111 de l'utilisateur sur lequel est connecté un équipement de visualisation 113, tel qu'un poste de télévision.

Le dispositif récepteur/décodeur 102 filtre une portion du flux de données global correspondant au service attendu par l'utilisateur.

Ensuite, le dispositif récepteur/décodeur 102 décode le signal MPEG compressé en un flux de données vidéo ou autre pour l'équipement de visualisation 113.

Le dispositif interactif 104 est connecté à l'organe formant multiplexeur et embrouilleur 108 d'une part, et au dispositif récepteur/décodeur 102 d'autre part. En pratique, le dispositif interactif 104 est localisé partiellement dans le centre de diffusion 101 et partiellement dans le dispositif terminal 111. Le dispositif interactif 104 permet à l'utilisateur d'interagir avec un certain nombre d'applications via un canal de retour. Le canal ou voie de retour peut être par exemple un canal de communication de type réseau commuté ou PSTN (Public Switched Telephone Network) ou un canal de communication mobile de type GPRS ou UMTS.

Le système d'accès conditionnel 105 est aussi connecté à l'organe formant multiplexeur et embrouilleur 108 et au dispositif récepteur/décodeur 102. Le système d'accès conditionnel 105 est également localisé partiellement dans le centre de diffusion 101 et partiellement dans le dispositif récepteur/décodeur 102. Le système d'accès conditionnel 105 permet à l'utilisateur d'accéder à des services auxquels il est abonné, par exemple des chaînes de télévision.

Le système d'accès conditionnel est articulé autour d'une carte à puce détenue par l'utilisateur. La carte à puce est capable de décrypter les messages en relation aux offres commerciales. La carte à puce communique avec un lecteur de carte à puce (non représenté) équipant le dispositif récepteur/décodeur 102.

En pratique, une partie des services transmis par le centre de diffusion 101 sont codés, les conditions et clefs de cryptage appliquées à une transmission étant déterminées par le système de contrôle d'accès.

D'une manière générale, les données codées sont transmises avec un mot de contrôle pour décoder les données.

Le mot de contrôle est lui-même crypté par une clef d'exploitation et transmis sous une forme cryptée.

Les données codées et le mot de contrôle crypté sont reçus par le dispositif récepteur/décodeur 102 ayant accès à la clef d'exploitation enregistrée dans la carte à puce insérée dans le dispositif récepteur/décodeur 102 pour décrypter le mot de contrôle crypté et ensuite décoder les données transmises.

En référence à la Fig.2, la structure du dispositif terminal 111 comprend un dispositif récepteur/décodeur 102 possédant une partie formant récepteur 202 et une partie formant décodeur 203. Le dispositif terminal 111 reçoit le flux de données 10 transmis par le centre de diffusion 101. La partie formant décodeur 203 comprend une mémoire-tampon 207 et une unité de traitement 209 communiquant avec un équipement de visualisation 113.

La partie formant récepteur 202 comprend au moins une chaîne de réception formée par un tuner 204, un démodulateur 205 et un démultiplexeur 206. Le démultiplexeur 206 réalise une séparation des différentes données transmises dans le flux de données 10 et fournit, d'une part, les informations de service à une unité de traitement d'information de service 211 et, d'autre part, les données audio/visuelles à la mémoire-tampon 207 pour une écriture dans celle-ci.

Les données présentes dans la mémoire-tampon 207 sont ensuite lues par l'unité de traitement 209 qui désembrouille le service reçu, si celui-ci est embrouillé, et si l'utilisateur a les droits d'accès correspondants.

Le résultat du traitement est ensuite acheminé vers l'équipement de visualisation 113.

L'unité de traitement d'information de service 211 a pour rôle de traiter l'ensemble des informations de service. L'unité 211 peut commander un stockage non volatile des informations de service dans la mémoire-cache 103.

Le dispositif de chargement automatique 103a coopère avec l'unité de traitement d'information de service 211 pour commander automatiquement un chargement des informations de service dans la mémoire-cache 103. Cette commande de chargement automatique peut être déclenchée par une minuterie programmée, par exemple la nuit, ou lors de l'apparition d'un événement particulier comme la mise en marche du dispositif récepteur/décodeur 102. Lorsque la commande de chargement automatique est déclenchée, le dispositif de chargement automatique 103a amène le tuner 204 à se caler par exemple sur la fréquence d'un transpondeur de service du centre de diffusion 101 à travers lequel sont diffusées l'ensemble des informations de service.

Le dispositif de récupération d'information 103b coopère avec l'unité de traitement d'information de service 211 pour récupérer des informations de service par lecture dans la mémoire-cache 103 ou par extraction du flux de données 10 reçu par le tuner 204.

La mémoire-tampon 207 est une mémoire temporaire qui est apte à contenir l'ensemble des informations devant permettre à la partie formant décodeur 203 de reconstituer le signal à visualiser.

En variante, un dispositif terminal peut comprendre deux chaînes de réception comportant chacune un tuner, un démodulateur et un démultiplexeur. Un tel dispositif récepteur/décodeur à deux chaînes de réception peut ainsi permettre l'enregistrement d'un premier flux de données sur une première chaîne de réception, et en parallèle la visualisation d'un second flux de données à partir de la seconde chaîne de réception.

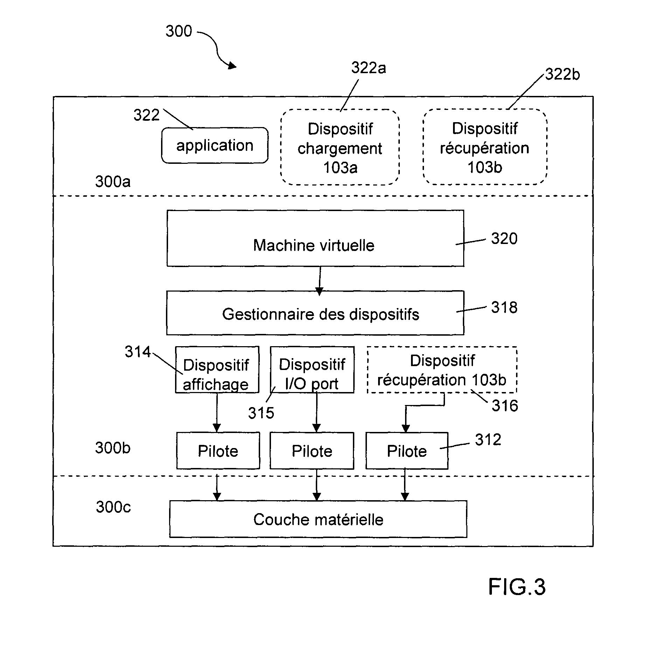

En référence à la Fig.3, l'architecture globale de la plate-forme 300 contenant le dispositif récepteur/décodeur comprend trois couches, à savoir, une couche applicative 300a, une couche logicielle intermédiaire 300b et une couche matérielle 300c.

La couche applicative 300a fournit les fonctionnalités des applications exécutées par la plate-forme sur un dispositif récepteur/décodeur.

Cette couche applicative 300a est sous le contrôle des dispositifs de fournisseurs de services.

Une application 322 peut:
- être résidente ou dynamiquement chargée dans le dispositif récepteur/décodeur ;
- s'exécuter indépendamment ou en conjonction avec le flux audio/vidéo/données d'un ou plusieurs services de télévision; et/ou
- effectuer des requêtes sur des serveurs via une voie de retour et afficher les réponses à l'écran de visualisation.

Le dispositif de chargement automatique 103a est par exemple réalisé à l'aide d'un programme de type applicatif 322a situé dans la couche applicative 300a.

Conformément à un mode particulier de réalisation de l'invention, le dispositif de récupération d'information 103b est réalisé à l'aide d'un programme de type applicatif 322b situé dans la couche applicative 300a.

Conformément à un autre mode particulier de réalisation de l'invention, le dispositif de récupération d'information 103b est réalisé à l'aide d'un programme 316 situé dans la couche logicielle intermédiaire 300b.

La plate-forme 300 comprend également, dans sa couche logicielle intermédiaire 300b, une machine virtuelle 320 fournissant un interpréteur de codes intermédiaires, un support de mémorisation et différents répertoires de traitement.

La plate-forme 300 comprend en outre un gestionnaire de dispositifs 318 et les dispositifs correspondants, c'est-à-dire, par exemple, un dispositif d'affichage 314, un dispositif d'entrées/sorties 315 et le dispositif de récupération d'information 103b (316).

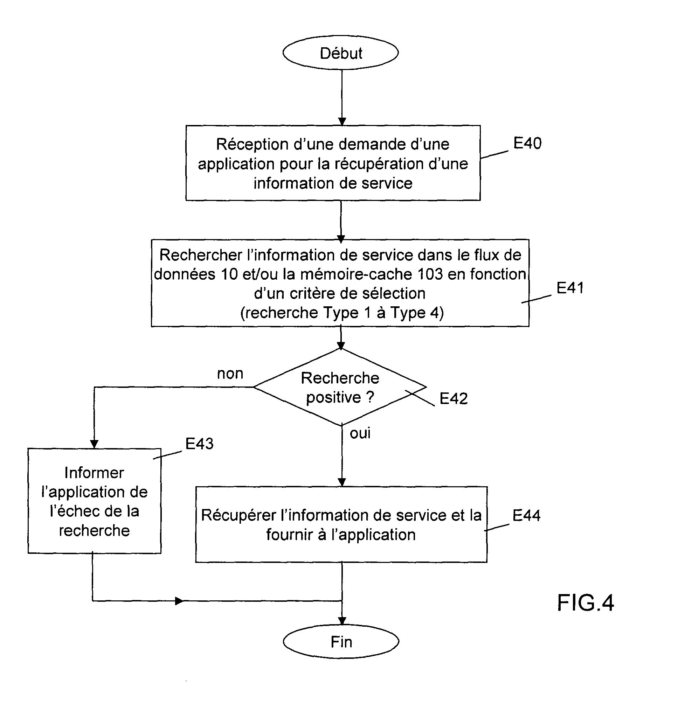

En référence plus particulièrement aux Figs.4, 5, 6A et 6B, il est maintenant décrit le fonctionnement du dispositif récepteur/décodeur 102 équipé du dispositif de récupération d'information 103b mettant en oeuvre le procédé de récupération d'information selon l'invention.

Le chargement automatique des tables MPEG dans la mémoire-cache 103 par le dispositif de chargement automatique 103a a été décrit en préambule dans l'exposé de l'état de la technique et il ne sera pas détaillé ici davantage.

Comme montré à la Fig.4, l'algorithme général du procédé de récupération d'information selon l'invention comprend les étapes principales E40 à E44 suivantes.

A l'étape E40, il est reçu une demande d'une application 322 pour la récupération d'une information de service directement dans le flux de données 10 ou dans la mémoire-cache 103.

L'étape E41 est prévue afin de rechercher l'information de service demandée dans le flux de données 10 et/ou dans la mémoire-cache 103.

Conformément à l'invention, la recherche effectuée à l'étape E41 peut être de différents types. Le type de recherche sélectionné dépend d'un ou plusieurs critères de sélection.

Les différents types de recherche sont les suivants :
Type 1) une recherche à partir de la mémoire-cache 103 uniquement ;
Type 2) une recherche à partir du flux de données 10 uniquement ;
Type 3) une recherche à partir de la mémoire-cache 103 puis à partir du flux de données 10 le cas échéant, c'est-à-dire, si l'information recherchée n'a pas été trouvée dans la mémoire-cache 103 ;
Type 4) une recherche à partir du flux de données 10 puis à partir de la mémoire-cache 103 le cas échéant, c'est-à-dire, si l'information recherchée n'a pas été trouvée dans le flux de données 10.

Conformément à l'invention, le ou les critères de sélection peuvent être définis et/ou gérés localement par l'application ou par la couche logicielle intermédiaire / couche matérielle, ou de manière centralisée par le système de télévision numérique interactive.

Les critères de sélection peuvent prendre en compte des éléments tels que la nature de l'information de service requise, la criticité de l'information de service pour l'application, en termes par exemple de temps d'accès, de «fraîcheur» de l'information, etc., et tous autres éléments que l'homme du métier estimera nécessaire de prendre en compte.

Lorsqu'un critère de sélection est géré par l'application, celle-ci est alors en mesure de définir elle-même le type de recherche à appliquer pour récupérer l'information de service.

L'étape E42 est une étape conditionnelle conduisant à l'exécution de l'étape E43 ou de l'étape E44.

Lorsque le résultat de la recherche de l'étape E41 est négatif, c'est-à-dire, lorsque l'information de service demandée n'est pas trouvée, l'étape E43 est exécutée pour informer l'application de l'échec de la recherche.

Lorsque le résultat de la recherche de l'étape E41 est positif, c'est-à-dire, lorsque l'information de service demandée est trouvée, l'étape E44 est exécutée pour récupérer l'information de service demandée et la fournir à l'application.

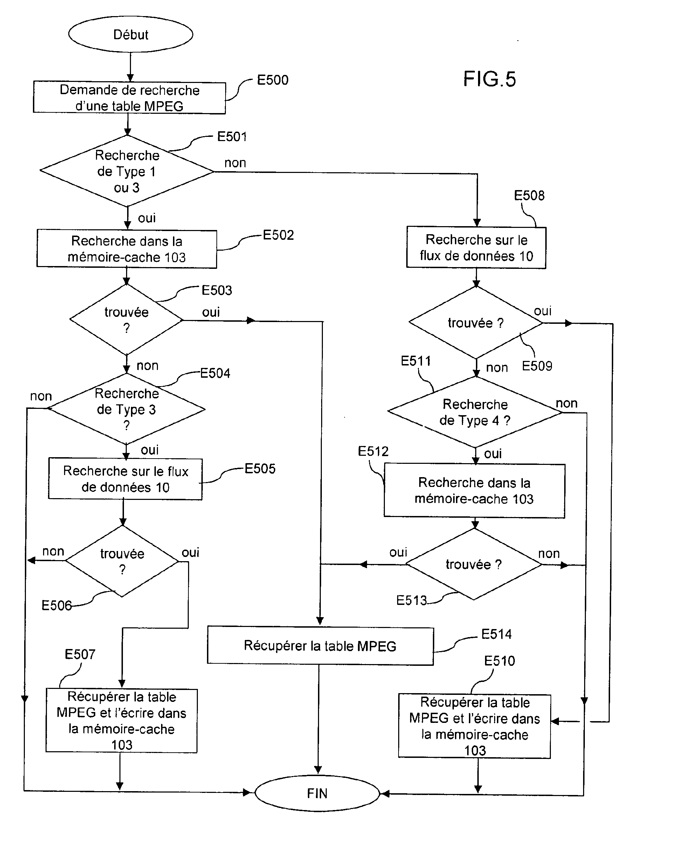

En référence plus particulièrement à la Fig.5, il est maintenant décrit de manière plus détaillée un exemple d'algorithme employé dans l'étape de recherche E41 du procédé selon l'invention.

Dans cet algorithme, il est traité de la recherche d'une table MPEG dans laquelle est encapsulée l'information de service demandée.

Comme montré à la Fig.5, l'algorithme comporte des étapes E500 à E514.

A l'étape E500, une application 322 effectue une demande pour la recherche d'une table MPEG.

Dans cette étape E500, le type de recherche à effectuer est défini à l'aide des critères de sélection. Un type, Type 1 à Type 4, est attribué à la recherche à effectuer.

L'étape E501 a pour fonction de déterminer si la recherche demandée est de Type 1 ou Type 3.

L'étape E501 est une étape conditionnelle conduisant à l'exécution de l'étape E502 ou de l'étape E508.

Dans l'affirmative, c'est-à-dire dans le cas où la recherche demandée est de Type 1 ou 3, l'étape E502 est exécutée.

L'étape E502 consiste à effectuer une recherche dans la mémoire-cache 103. Le traitement effectué par l'algorithme après l'étape E502 dépend du succès ou de l'échec de la recherche dans la mémoire-cache 103.

L'étape conditionnelle E503 analyse le résultat de la recherche effectuée à l'étape E502.

Dans le cas où la table MPEG recherchée est effectivement trouvée dans la mémoire-cache 103 à l'étape E502, il est procédé ensuite à l'exécution de l'étape E514.

L'étape E514 concerne la récupération de la table MPEG et l'extraction de l'information de service demandée pour une délivrance à l'application 322 ayant émis la demande.

Dans le cas où la table MPEG demandée à l'étape E500 n'est pas trouvée dans la mémoire-cache 103 à l'étape E502, il est déterminé à l'étape E504 si la recherche est de Type 3.

Dans la négative, c'est-à-dire, si la recherche n'est pas de Type 3, l'algorithme se termine.

Dans l'affirmative, il est procédé à l'étape E505 à une recherche sur le flux de données 10.

Une étape E506 est prévue ensuite afin d'analyser la recherche effectuée à l'étape E505.

L'étape E506 est une étape conditionnelle conduisant à la fin de l'algorithme ou à l'exécution de l'étape E507.

Dans le cas où la table MPEG n'est pas trouvée sur le flux de données 10 à l'étape E505, l'algorithme se termine.

Dans le cas inverse, à l'étape E507, la table MPEG est récupérée sur le flux de données 10, est écrite dans la mémoire-cache 103 et l'information de service demandée est ensuite extraite pour être délivrée à l'application 322 ayant émis la demande.

En référence de nouveau à l'étape E501 de l'algorithme, lorsqu'il est déterminé à l'étape E501 que la recherche demandée n'est pas de Type 1 ou 3, l'étape E508 est alors exécutée.

A l'étape E508, la table MPEG est recherchée sur le flux de données 10.

Le résultat de la recherche de l'étape E508 est analysé par l'étape conditionnelle E509.

Lorsque la table MPEG recherchée est trouvée sur le flux de données 10, il est exécuté l'étape E510.

L'étape E510 est analogue à l'étape E507 et consiste à récupérer la table MPEG sur le flux de données 10, à l'écrire dans la mémoire-cache 103 et à extraire l'information de service demandée pour la délivrer ensuite à l'application 322.

Dans le cas inverse, c'est-à-dire lorsque la table MPEG n'est pas trouvée sur le flux de données 10 à l'étape E508, il est procédé à l'étape E511.

L'étape E511 est une étape conditionnelle conduisant à la fin de l'algorithme ou à l'exécution de l'étape E512.

A l'étape E511, il est déterminé si la recherche demandée à l'étape E500 est une étape de Type 4.

Dans la négative, c'est-à-dire lorsque la recherche n'est pas de Type 4, l'algorithme se termine.

Dans l'affirmative, c'est-à-dire lorsque la recherche est de Type 4, il est exécuté l'étape E512 dans laquelle la table MPEG est recherchée dans la mémoire-cache 103.

Le résultat de l'étape E512 est analysé par l'étape conditionnelle E513.

A l'étape E513, lorsque la table MPEG est trouvée dans la mémoire-cache 103 à l'étape E512, l'étape E514 est exécutée ensuite afin de récupérer la table MPEG dans la mémoire-cache 103 et d'extraire l'information de service demandée pour la délivrer à l'application 322.

Dans le cas inverse, c'est-à-dire lorsque la table MPEG n'est pas trouvée dans la mémoire-cache 103, l'algorithme se termine.

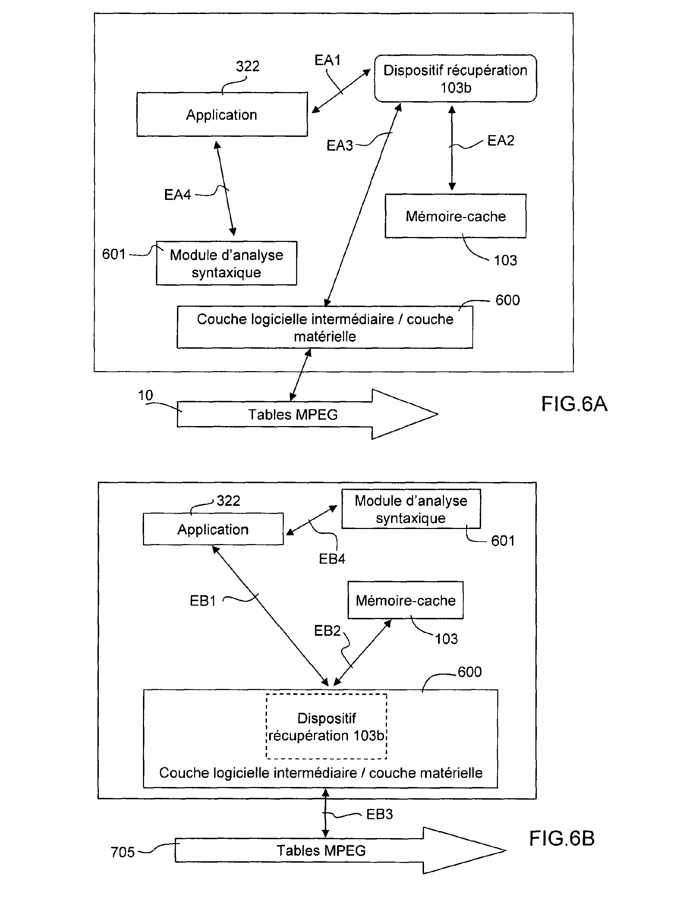

En référence aux Figs.6A et 6B, il est maintenant détaillé des grandes étapes fonctionnelles dans le dispositif récepteur/décodeur 102 entre des éléments fonctionnels impliqués dans la récupération d'une information de service encapsulée dans une table MPEG.

La Fig.6A concerne plus particulièrement un mode de réalisation de l'invention dans lequel la récupération d'information est gérée au niveau de la couche applicative 300a (Fig.3).

Comme montré à la Fig.6A, la récupération des tables MPEG dans ce mode de réalisation de l'invention fait appel à des étapes EA1 à EA4 intervenant entre l'application 322, le dispositif de récupération d'information 103b, la mémoire-cache 103, la couche logicielle intermédiaire / couche matérielle 600 (couches 300b et 300c de la Fig.3), le flux de données 10 et un module d'analyse syntaxique 601 appelé «parser» en anglais.

A l'étape EA1, l'application 322 demande au dispositif de récupération d'information 103b de récupérer une information de service dans une table MPEG.

Aux étapes EA2 et EA3, le dispositif de récupération d'information 103b récupère la table MPEG correspondante dans la mémoire-cache 103 ou sur le flux de données 10 selon le type, Type 1 à Type 4, de la recherche effectuée. La récupération de la table MPEG correspondante sur le flux de données 10 est effectuée par l'intermédiaire de la couche logicielle intermédiaire / couche matérielle 600.

A l'étape EA4, le module d'analyse syntaxique 801 extrait l'information de service demandée de la table MPEG récupérée et met en forme celle-ci afin de la délivrer à l'application 322.

La Fig.6B concerne plus particulièrement un mode de réalisation de l'invention dans lequel la récupération d'information est gérée au niveau de la couche logicielle intermédiaire / couche matérielle 600.

Comme montré à la Fig.6B, la récupération des tables MPEG dans ce mode de réalisation de l'invention fait appel à des étapes EB1 à EB4 intervenant entre l'application 322, le dispositif de récupération d'information 103b, la mémoire-cache 103, la couche logicielle intermédiaire / couche matérielle 600, le flux de données 10 et le module d'analyse syntaxique 601.

A l'étape EB1, l'application 322 demande au dispositif de récupération d'information 103b de récupérer une information de service dans une table MPEG.

La demande de l'application 322 est transmise vers la couche logicielle intermédiaire / couche matérielle 600 à l'intention du dispositif de récupération d'information 103b.

Aux étapes EB2 et EB3, le dispositif de récupération d'information 103b récupère la table MPEG correspondante dans la mémoire-cache 103 ou sur le flux de données 10 selon le type, Type 1 à Type 4, de la recherche effectuée.

A l'étape EB4, le module d'analyse syntaxique 601 extrait l'information de service demandée de la table MPEG récupérée et met en forme celle-ci afin de la délivrer à l'application 322.

Le mode de réalisation de l'invention qui vient d'être décrit ci-dessus en référence à la Fig.6B présente l'avantage d'un traitement qui peut être totalement transparent pour l'application 322. En effet, l'application 322 peut se contenter de ne transmettre que sa demande de récupération d'information à la couche logicielle intermédiaire/couche matérielle 600, comme dans un récepteur/décodeur classique, le dispositif de récupération d'information 103b ayant à charge de gérer le type de recherche et la récupération d'information en fonction du ou des critères de sélection.

Il est maintenant décrit à travers un exemple une organisation structurelle particulière, caractéristique de la présente invention, pour le stockage des informations de service et tables MPEG dans la mémoire-cache 103.

L'organisation structurelle des informations de service et tables MPEG selon l'invention est de type arborescente et reproduit sensiblement celle existant dans un flux de données et un système de télévision numérique interactive répondant aux normes MPEG-DVB. Il est ainsi possible d'avoir un traitement de récupération d'information transparent pour l'application 322, car les mêmes identifiants sont utilisés pour récupérer une table MPEG dans le flux de données 10 ou dans la mémoire-cache 103.

Un système de télévision numérique interactive répondant aux normes MPEG-DVB comprend un certain nombre de flux de transport TS, correspondant aux flux de données 10 de la description ci-dessus.

Chaque flux de transport TS comporte un ensemble de flux élémentaires sous la forme de paquets auxquels correspondent des identifiants PID.

Les paquets peuvent comprendre des données audio, vidéo et de texte, ainsi que des informations de service, qui sont encapsulées dans des sections de données MPEG. Les informations de service sont également encapsulées dans des tables MPEG comprenant une ou plusieurs sections de données MPEG.

Dans un même paquet PID, il est possible d'avoir plusieurs tables MPEG qui sont différenciées entre elles par des identifiants uniques. L'identifiant d'une table MPEG comporte une portion obligatoire TID («Table Identifier» en anglais) et une portion d'extension optionnelle TIDExt («Table Identifier Extension» en anglais).

Une table MPEG comprend un en-tête suivi d'au moins une section MPEG de données. L'en-tête est choisi de type long ou de type court selon la taille de la table MPEG.

Une table MPEG de petite taille (moins de 1 Koctets de données) comprend un en-tête court et une seule section de données MPEG. L'en-tête court comporte un identifiant TID et une information représentant la longueur de la section MPEG.

Une table MPEG de plus grande taille (plus de 1 Koctets de données) comprend un en-tête long et plusieurs sections de données MPEG. L'en-tête long comporte l'identifiant TID et l'extension TIDExt, des informations relatives aux sections MPEG incluses telles que la longueur et le nombre des sections MPEG, et autres.

Un exemple de l'organisation structurelle des informations de service et tables MPEG selon l'invention est le suivant:
Network_Id = Identifiant du système ou réseau TV
TS_Id 1 = Identifiant de la fréquence 1
PID 1 = Identifiant du paquet 1
TID A = Identifiant de la Table MPEG A
TID B = Identifiant de la Table MPEG B
PID 2 = Identifiant du paquet 2
TID C = Identifiant de la Table MPEG C
TID D = Identifiant de la Table MPEG D
...
PID n = Identifiant du paquet n
TID E = Identifiant de la Table MPEG E
TS_Id 2 = Identifiant de la fréquence 2
PID 1 = Identifiant du paquet 1
TID A = Identifiant de la Table MPEG A
TID B = Identifiant de la Table MPEG B
PID 2 = Identifiant du paquet 2
TID C = Identifiant de la Table MPEG C
TID D = Identifiant de la Table MPEG D
PID 3 = Identifiant du paquet 3
TID F = Identifiant de la Table MPEG F
TID G = Identifiant de la Table MPEG G
...
PID m = Identifiant du paquet m
TID H = Identifiant de la Table MPEG H
...

Dans un dispositif récepteur/décodeur répondant aux normes MPEG-DVB, les services sont identifiés par trois éléments:
- l'identifiant du système TV numérique (Network_Id);
- l'identifiant du flux de transport TS permettant au dispositif récepteur/décodeur de se caler sur la fréquence correspondante (TS_Id); et
- l'identifiant du service (Service_Id).

Lorsqu'une application interactive a besoin de récupérer des informations de service dans une table MPEG présente sur le flux de transport TS courant, elle dispose pour cela de l'identifiant TID de la table MPEG, de l'identifiant PID du paquet et éventuellement de l'identifiant TIDExt.

Le dispositif de récupération d'information 103b selon l'invention dispose donc de tous les identifiants nécessaires pour déterminer si la table MPEG recherchée est présente dans la mémoire-cache 103.

Bien entendu, la présente invention ne se limite pas aux détails des modes particuliers de réalisation décrits ici à titre d'exemple, mais s'étend au contraire aux modifications à la portée de l'homme du métier, sans sortir du cadre de l'invention.

## Revendications

1. Procédé de récupération d'information dans un système de télévision numérique interactive (106) dans lequel une information provenant d'une centre de diffusion (101) est transportée dans un flux de données (10) jusqu'à au moins un dispositif terminal (111) dans lequel s'exécute une ou plusieurs applications (322), ledit procédé comportant une étape pour charger et stocker ladite information dans des moyens de stockage (103) équipant ledit dispositif terminal (111), **caractérisé en ce qu'**il comporte en outre les étapes suivantes exécutées dans ledit dispositif terminal (111) :
- a) recevoir (E40) une demande émise par au moins une dite application (322) pour récupérer ladite information ;
- b) en fonction d'au moins un critère de sélection prédéterminé, rechercher (E41) ladite information dans au moins un des supports d'information formés par ledit flux de données (10), et lesdits moyens de stockage d'information (103) ; et
- c) dans le cas d'une recherche positive, récupérer (E44) ladite information dans ledit support d'information (10, 103) contenant ladite information et fournir ladite information ainsi récupérée à ladite au moins une application (322) émettrice de ladite demande.

2. Procédé selon la revendication 1, **caractérisé en ce que** ladite étape de recherche b) comprend la sous-étape suivante :
- b1) rechercher (Type 1) ladite information dans lesdits moyens de stockage (103).

3. Procédé selon la revendication 1, **caractérisé en ce que** ladite étape de recherche b) comprend la sous-étape suivante :
- b2) rechercher (Type 2) ladite information dans ledit flux de données (10).

4. Procédé selon la revendication 1, **caractérisé en ce que** ladite étape de recherche b) comprend la sous-étape suivante :
- b3) rechercher (Type 4) ladite information dans lesdits moyens de stockage (103) après une recherche infructueuse dans ledit flux de données (10).

5. Procédé selon la revendication 1, **caractérisé en ce que** ladite étape de recherche b) comprend la sous-étape suivante :
b4) rechercher (Type 3) ladite information dans ledit flux de données (10) après une recherche infructueuse dans lesdits moyens de stockage (103).

6. Procédé selon l'une quelconque des revendications 1 à 5, **caractérisé en ce que** ladite information est encapsulée dans au moins une table MPEG identifiée par un identifiant de table (TID) respectif.

7. Procédé selon la revendication 6, caractérisé en ce ladite étape de recherche b) comprend la sous-étape (E502, E505, E508, E512) de recherche de ladite table MPEG à partir de son identifiant de table (TID) respectif tandis que l'étape de récupération c) comprend la sous-étape (E507, E510, E514) de récupération de l'information à partir de la table MPEG ainsi identifiée.

8. Procédé selon l'une quelconque des revendications 1 à 7, **caractérisé en ce qu'**il comprend en outre l'étape de définir au moins un dit critère de sélection par ladite application (322).

9. Procédé selon l'une quelconque des revendications 1 à 8, **caractérisé en ce qu'**il comprend en outre l'étape de définir au moins un dit critère de sélection par une couche logicielle intermédiaire (300b, 600) et/ou une couche matérielle (300c, 600) dudit dispositif terminal (111).

10. Procédé selon l'une quelconque des revendications 1 à 9, **caractérisé en ce qu'**il comprend en outre l'étape de définir au moins un dit critère de sélection par ledit système de télévision numérique interactive (106).

11. Procédé selon l'une quelconque des revendications 1 à 10 et la revendication 6, **caractérisé en ce qu'**il comprend en outre l'étape de stocker lesdites informations et/ou tables MPEG dans lesdits moyens de stockage (103) selon une organisation structurelle similaire à celle desdites informations et/ou tables MPEG dans ledit flux de données (10).

12. Procédé selon l'une quelconque des revendications 1 à 11, **caractérisé en ce qu'**il comprend en outre l'étape de mise en forme (EA4, EB4) de ladite information récupérée avant la fourniture de celle-ci à ladite au moins une application (322) émettrice de ladite demande.

13. Dispositif de récupération d'information dans un système de télévision numérique interactive (106) dans lequel une information provenant d'une centre de diffusion (101) est transportée dans un flux de données (10) jusqu'à au moins un dispositif terminal (111) dans lequel s'exécute une ou plusieurs applications (322), ledit dispositif terminal (111) étant équipé de moyens de stockage d'information (103) et de moyens (103a) pour charger ladite information dans lesdits moyens de stockage d'information (103), **caractérisé en ce qu'**il comporte en outre :
des moyens (211, 322b, 316, 320, 318) pour recevoir une demande émise par au moins une dite application (322) pour récupérer ladite information ;
des moyens (211, 322b, 316, 320, 318) pour rechercher, en fonction d'au moins un critère de sélection prédéterminé, ladite information dans au moins un des supports d'information formés par ledit flux de données (10), et lesdits moyens de stockage d'information (103) ; et
des moyens (211, 322b, 316, 320, 318) pour récupérer, dans le cas d'une recherche positive, ladite information dans ledit support d'information (10, 103) contenant ladite information et fournir ladite information ainsi récupérée à ladite au moins une application (322) émettrice de ladite demande.

14. Dispositif selon la revendication 13, **caractérisé en ce que** lesdits moyens de recherche comprennent des premiers moyens supplémentaires pour rechercher ladite information dans lesdits moyens de stockage (103).

15. Dispositif selon la revendication 13, **caractérisé en ce que** lesdits moyens de recherche comprennent des seconds moyens supplémentaires pour rechercher ladite information dans ledit flux de données (10).

16. Dispositif selon la revendication 13, **caractérisé en ce que** lesdits moyens de recherche comprennent des troisièmes moyens supplémentaires pour rechercher ladite information dans lesdits moyens de stockage (103) après une recherche infructueuse dans ledit flux de données (10).

17. Dispositif selon la revendication 13, **caractérisé en ce que** lesdits moyens de recherche comprennent des quatrièmes moyens supplémentaires pour rechercher ladite information dans ledit flux de données (10) après une recherche infructueuse dans lesdits moyens de stockage (103).

18. Dispositif selon l'une quelconque des revendications 13 à 17, **caractérisé en ce que** ladite information est encapsulée dans au moins une table MPEG identifiée par un identifiant de table (TID) respectif.

19. Dispositif selon la revendication 18, caractérisé en ce lesdits moyens de recherche comprennent des cinquièmes moyens supplémentaires pour rechercher ladite table MPEG à partir de son identifiant de table (TID) respectif tandis que lesdits moyens de récupération comprennent des moyens supplémentaires pour récupérer l'information à partir de la table MPEG ainsi identifiée.

20. Dispositif selon l'une quelconque des revendications 13 à 19, **caractérisé en ce qu'**il comprend en outre des premiers moyens pour définir au moins un dit critère de sélection par ladite application (322).

21. Dispositif selon l'une quelconque des revendications 13 à 20, **caractérisé en ce qu'**il comprend en outre des seconds moyens pour définir au moins un dit critère de sélection par une couche logicielle intermédiaire (300b, 600) et/ou une couche matérielle (300c, 600) dudit dispositif terminal (111).

22. Dispositif selon l'une quelconque des revendications 13 à 21, **caractérisé en ce qu'**il comprend en outre des troisièmes moyens pour définir au moins un dit critère de sélection par ledit système de télévision numérique interactive (106).

23. Dispositif selon l'une quelconque des revendications 13 à 22 et la revendication 18, **caractérisé en ce que** lesdits moyens de stockage (103) comprennent des moyens supplémentaires pour stocker lesdites informations et/ou tables MPEG selon une organisation structurelle similaire à celle desdites informations et/ou tables MPEG dans ledit flux de données (10).

24. Dispositif selon l'une quelconque des revendications 13 à 23, **caractérisé en ce qu'**il comprend en outre des moyens (601) pour mettre en forme ladite information récupérée avant de fournir celle-ci à ladite au moins une application (322) émettrice de ladite demande.

25. Dispositif récepteur/décodeur dans un système de télévision numérique interactive (106), **caractérisé en ce qu'**il comprend des moyens adaptés à une mise en oeuvre du procédé de récupération d'information selon l'une quelconque des revendications 1 à 12.

26. Dispositif récepteur/décodeur dans un système de télévision numérique interactive, **caractérisé en ce qu'**il comprend un dispositif de récupération d'information (103b) selon l'une quelconque des revendications 13 à 24.

27. Dispositif terminal dans un système de télévision numérique interactive, **caractérisé en ce qu'**il comprend un dispositif récepteur/décodeur (102) selon la revendication 25 ou 26.

28. Système de télévision numérique interactive, **caractérisé en ce qu'**il comprend au moins un dispositif récepteur/décodeur (102) selon la revendication 25 ou 26.

29. Système de télévision numérique interactive, **caractérisé en ce qu'**il comprend au moins un dispositif terminal (111) selon la revendication 27.
